# DEMANDE DE BREVET EUROPEEN

(11) **EP 4 837 782 A1**
(43) Date de publication de la demande: **11.11.2026**
(21) Numéro de dépôt: 26177023.4
(22) Date de dépôt: 06.05.2026
(51) Int. Cl.: B60N 2/865

(54) **SYSTÈME D'APPUI-TÊTE POUR UN DOSSIER DE SIÈGE DE VÉHICULE AUTOMOBILE**

(30) Priorité: 09.05.2025 FR 2504948
(71) Demandeur: Tesca Seat Components Services, 92800 Puteaux (FR)
(72) Inventeur: CARPENTIER, Alain, 92800 Puteaux (FR); DELUS, Christian, 92800 Puteaux (FR); ZEDIAR, Ahmed, 92800 Puteaux (FR)
(74) Mandataire: Sayettat, Julien Christian

(57) **Abrégé**

L'invention concerne un système (1) d'appui-tête comprenant un support (5) monté sur une embase (6) par l'intermédiaire d'un dispositif de réglage longitudinal dudit support comprenant au moins deux tiges (7) présentant chacune une extrémité arrière (8) fixée sur ladite embase, lesdites tiges étant montées coulissantes dans des conduits (10) prévus dans ledit support, lesdites tiges étant chacune pourvues d'une pluralité de crans de réglage (11), un verrou (12) présentant une première (13a) et une deuxième (13b) branche, ledit verrou étant actionnable en position de verrouillage par un emboitement de ladite première branche dans au moins un cran (11) et de ladite deuxième branche dans au moins un cran (11) d'une autre tige (7), un moyen d'actionnement (19) dudit verrou vers sa position de déverrouillage, un ressort (18) de rappel dudit verrou vers sa position de verrouillage.

## Description

L'invention concerne un système d'appui-tête pour un dossier de siège de véhicule automobile.

Il est connu de réaliser un système d'appui-tête pour un dossier de siège de véhicule automobile, ledit dossier étant pourvu d'une armature métallique, ledit système comprenant :
- un appui-tête comprenant un coussin d'appui de la tête d'un occupant dudit siège et un support recevant par l'avant ledit coussin,
- une embase destinée à être fixée en recouvrement du haut de ladite armature, ladite embase étant disposée en arrière dudit support,
ledit support étant monté sur ladite embase par l'intermédiaire d'un dispositif de réglage longitudinal dudit support.

Cependant, les agencements connus présentent souvent une grande complexité et une ergonomie parfois non optimisée.

L'invention a pour but de pallier ces inconvénients.

A cet effet, l'invention propose un système d'appui-tête pour un dossier de siège de véhicule automobile, ledit dossier étant pourvu d'une armature métallique, ledit système comprenant :
- un appui-tête comprenant un coussin d'appui de la tête d'un occupant dudit siège et un support recevant par l'avant ledit coussin,
- une embase destinée à être fixée en recouvrement du haut et de l'avant de ladite armature,
ledit support étant monté sur ladite embase par l'intermédiaire d'un dispositif de réglage longitudinal dudit support, ledit dispositif comprenant :
- au moins deux tiges métalliques parallèles s'étendant selon une direction longitudinale et présentant chacune une extrémité arrière et une extrémité avant, lesdites tiges étant fixées par leur extrémité arrière sur ladite embase, lesdites tiges étant montées coulissantes dans des conduits prévus dans ledit support, lesdites tiges étant chacune pourvues d'une pluralité de crans de réglage s'étageant selon ladite direction longitudinale, lesdits crans s'étageant et étant orientés de façon analogue d'une tige à l'autre,
- un verrou métallique présentant une première et une deuxième branche, ledit verrou étant actionnable en translation transversale entre une position de verrouillage et une position de déverrouillage, la mise dudit verrou en position de verrouillage réalisant un emboitement de ladite première branche dans au moins un cran d'une tige et de ladite deuxième branche dans au moins un cran d'une autre tige,
- un moyen d'actionnement dudit verrou vers sa position de déverrouillage, ledit moyen étant monté solidairement audit support,
- un ressort de rappel dudit verrou vers sa position de verrouillage.

Dans cette description, les termes de positionnement dans l'espace (longitudinal, transversal, haut, avant, arrière, horizontal, vertical, ...) sont pris en référence au véhicule dans lequel est disposé le système d'appui-tête, ledit véhicule s'étendant longitudinalement selon sa longueur (axe X), transversalement selon sa largeur (axe Y) et verticalement selon sa hauteur (axe Z).

En outre, les termes de repérage circulaire (axial, radial, ...) sont considérés relativement à l'axe d'extension d'une tige.

La présence d'au moins deux tiges métalliques est requise afin d'assurer leur bon coulissement dans les conduits, en minimisant le risque de blocage par arc-boutement.

Avec l'agencement proposé, on dispose d'un agencement simplifié par rapport aux réalisations de l'art antérieur, ceci entre autres du fait que l'on dispose, avec l'ensemble constitué par l'appui-tête et l'embase, d'un module qui reste simplement à fixer en haut de l'armature du dossier, aucun élément du dispositif de réglage - tel un dispositif de verrouillage - n'étant intégré au dossier.

En outre, le moyen d'actionnement étant solidaire du support, l'occupant du siège y accède de façon particulièrement ergonomique.

D'autres particularités et avantages de l'invention apparaîtront dans la description qui suit, faite en référence aux figures jointes, dans lesquelles :
[Fig.1a] et
[Fig.1b] sont des vues schématiques en perspective partielle d'ensemble éclatée (figure 1a) et de détail non éclatée (figure 1b) d'un système selon une première réalisation,
[Fig.2a] et
[Fig.2b] sont des vues schématiques en perspective partielle d'ensemble éclatée (figure 2a) et de détail non éclatée (figure 2b) d'un système selon une deuxième réalisation,

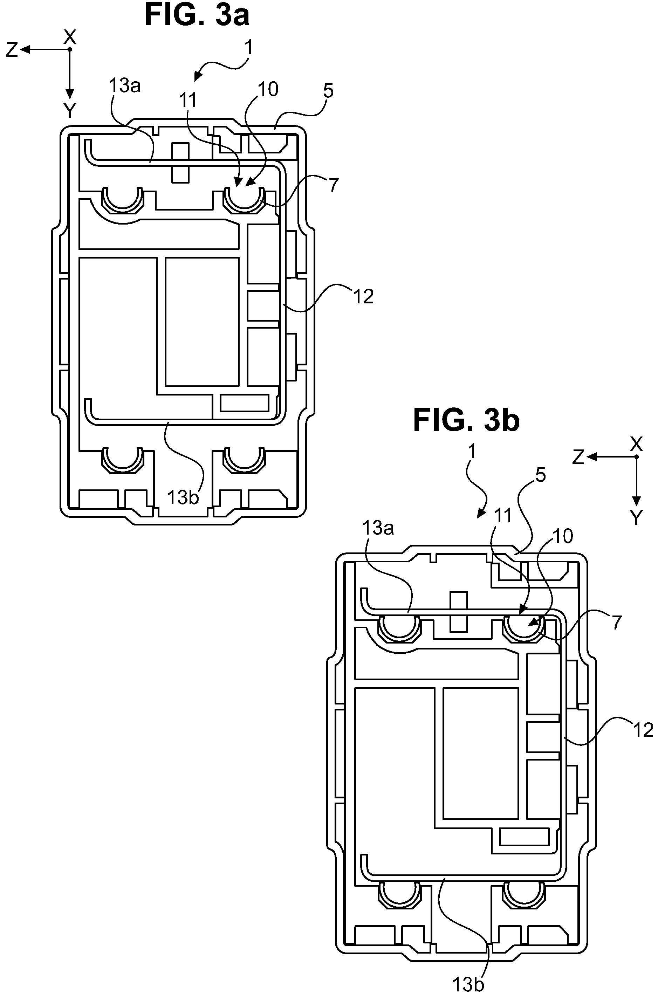

[Fig.3a] et
[Fig.3b] sont des vues schématiques en coupe verticale transversale partielle du système représenté en figures 1 ou 2, le verrou étant en position de déverrouillage (figure 3a) et de verrouillage (figure 3b),

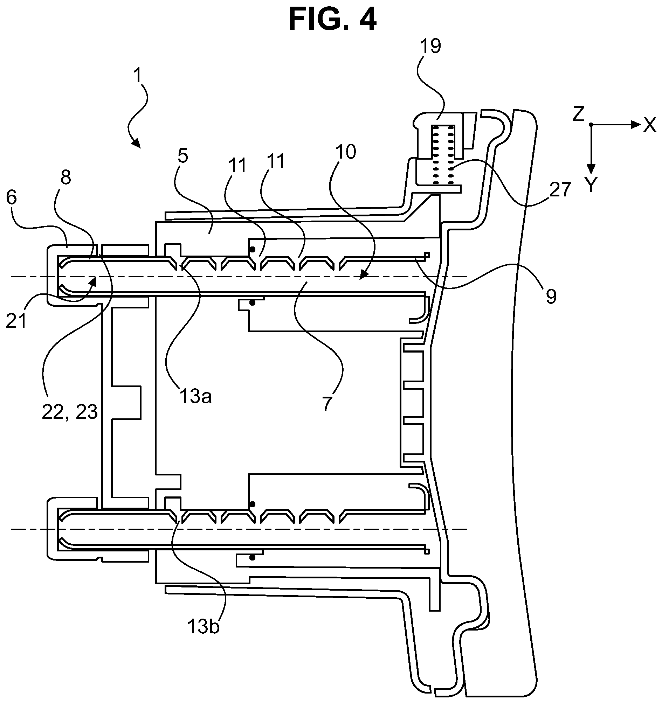

[Fig.4] est une vue schématique en coupe horizontale partielle du système représenté en figure 1, le verrou étant en position de verrouillage.

En référence aux figures, on décrit un système 1 d'appui-tête pour un dossier de siège de véhicule automobile, ledit dossier étant pourvu d'une armature métallique non représentée, ledit système comprenant :
- un appui-tête 3 comprenant un coussin 4 d'appui de la tête d'un occupant dudit siège et un support 5 recevant par l'avant ledit coussin,
- une embase 6 destinée à être fixée en recouvrement du haut et de l'avant de ladite armature,
ledit support étant monté sur ladite embase par l'intermédiaire d'un dispositif de réglage longitudinal dudit support, ledit dispositif comprenant :
- au moins deux tiges 7 métalliques parallèles s'étendant selon une direction longitudinale et présentant chacune une extrémité arrière 8 et une extrémité avant 9, lesdites tiges étant fixées par leur extrémité arrière 8 sur ladite embase, lesdites tiges étant montées coulissantes dans des conduits 10 prévus dans ledit support, lesdites tiges étant chacune pourvues d'une pluralité de crans de réglage 11 s'étageant selon ladite direction longitudinale, lesdits crans s'étageant et étant orientés de façon analogue d'une tige 7 à l'autre,
- un verrou 12 métallique - de forme générale en U selon la réalisation représentée - présentant une première 13a et une deuxième 13b branche - parallèles entre elles selon la réalisation représentée -, ledit verrou étant actionnable en translation transversale entre une position de verrouillage et une position de déverrouillage, la mise dudit verrou en position de verrouillage réalisant un emboitement de ladite première branche dans au moins un cran 11 d'une tige 7 et de ladite deuxième branche dans au moins un cran 11 d'une autre tige 7,
- un moyen d'actionnement dudit verrou vers sa position de déverrouillage, ledit moyen étant monté solidairement audit support,
- un ressort de rappel dudit verrou vers sa position de verrouillage.

Selon les réalisations représentées :
- le système 1 comprend en outre un bras 14 monté en rotation en sa partie médiane 15 sur le support 5, ledit bras présentant une première extrémité 16a, pourvue d'une fente 17 ou d'un orifice recevant une des branches 13a,13b du verrou 12, de manière à pouvoir actionner ledit verrou d'une position à l'autre par mise en rotation dudit bras, ledit bras présentant en outre une deuxième extrémité 16b,
- le ressort 18 de rappel actionne ledit bras afin de rappeler ledit verrou vers sa position de verrouillage,
- le moyen d'actionnement 19 coopère avec ladite deuxième extrémité pour permettre une rotation dudit bras en vue d'actionner ledit verrou vers sa position de déverrouillage à l'encontre dudit ressort.

Selon les réalisations représentées, le verrou 12 est à base de fil métallique replié.

Selon divers modes de réalisation, un cran de réglage 11 vu en coupe axiale présente :
- soit, selon les réalisations représentées, une forme générale de U dont les branches sont parallèles, de sorte que le verrou 12 doive être actionné par un occupant du siège afin de réaliser un réglage du support 5 vers l'avant et vers l'arrière,
- soit, selon une réalisation non représentée, une forme générale de U dont les branches s'écartent l'une de l'autre à mesure que l'on se dégage dudit cran, la branche arrière étant parallèle au sens d'extraction de la branche 13a,13b du verrou 12 insérée dans ledit cran, de sorte que ledit verrou doive être actionné par un occupant du siège afin de réaliser un réglage du support 5 vers l'arrière et soit réglable vers l'avant par simple traction dudit support par ledit occupant, ce qui permet un réglage dudit support vers l'avant facilité et un maintien dudit support dans sa position de réglage quand la tête d'un occupant du siège s'appuie dessus ou vient le heurter lors d'un accident, ce qui permet d'optimiser sa sécurité.

Selon les réalisations représentées, les crans de réglage 11 sont pourvus d'un goulot de facilitation d'accès - conformé ici « en entonnoir » - d'une branche 13a,13b du verrou.

Selon les réalisations représentées, le moyen d'actionnement 19 est sous la forme d'un bouton poussoir.

Selon les réalisations représentées, le système 1 comprend en outre un ressort additionnel 27 de renvoi du bouton 19 en position nominale en l'absence de pression exercée dessus.

La présence d'un tel ressort additionnel 27 permet d'éliminer les bruits de vibration au niveau du bouton 19.

En outre, dans le cas où un cran 11 présente une forme générale de U dont les branches s'écartent l'une de l'autre à mesure que l'on se dégage dudit cran, la présence du ressort additionnel empêche un enfoncement du bouton 19 lors du réglage vers l'avant du support 5.

Selon les réalisations représentées :
- le système 1 comprend quatre tiges, 7 lesdites tiges vues selon la direction longitudinale se positionnant selon les quatre sommets d'un parallélogramme, de manière à assurer un coulissement optimisé desdites tiges dans leurs conduits 10,
- la mise du verrou 12 en position de verrouillage entraîne un emboitement de sa première branche 13a dans deux crans 11 respectifs de deux desdites tiges et un emboitement de sa deuxième branche 13b dans deux crans respectifs des deux autres desdites tiges.

En particulier, les tiges 7 vues selon la direction longitudinale se positionnent selon les quatre sommets d'un parallélogramme en forme de rectangle.

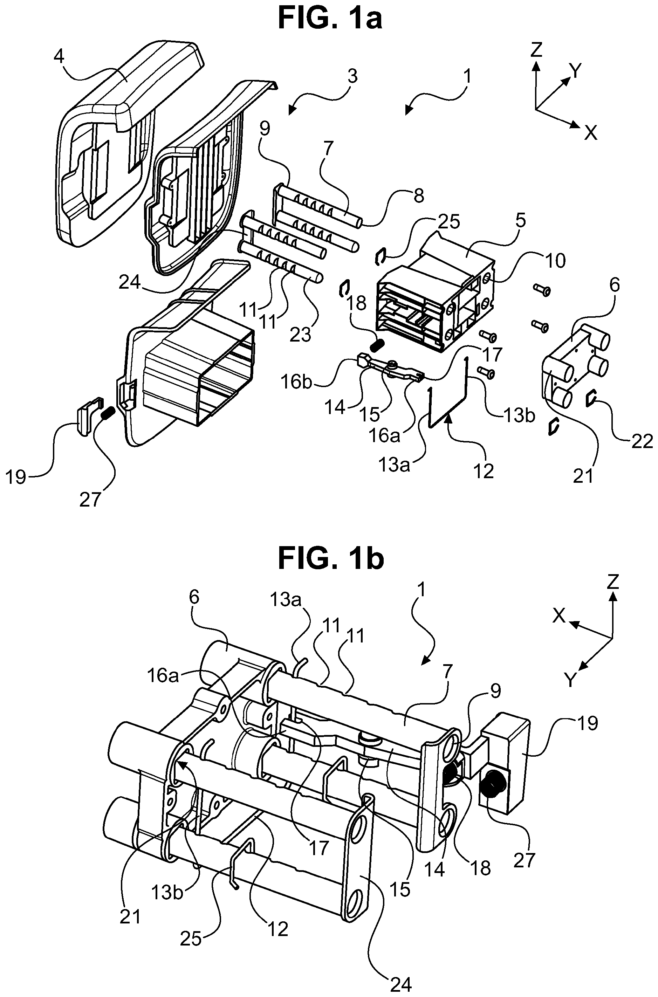

Selon la première réalisation représentée notamment en figures 1a et 1b :
- les tiges 7 sont fixées sur l'embase 6 - qui est notamment en matériau plastique moulé - par emboitement de leur extrémité arrière 8 dans des logements 21 prévus dans ladite embase, chacune desdites tiges étant maintenus en place par une épingle de blocage 22, en métal à ressort s'insérant dans un cran de blocage 23 prévu en ladite extrémité,
- les tiges 7 définissent deux paires de tiges, les extrémités avant des tiges 7 de chacune desdites paires étant reliées entre elles par une traverse 24 métallique respective soudée ou rivetée sur lesdites extrémités, un tel agencement évitant de fragiliser outre mesure le support 5.

Selon cette première réalisation, des épingles en métal à ressort 25 sont également utilisées pour assurer une pression radiale sur les tiges 7, afin d'assurer leur coulissement ajusté dans leurs conduits 10.

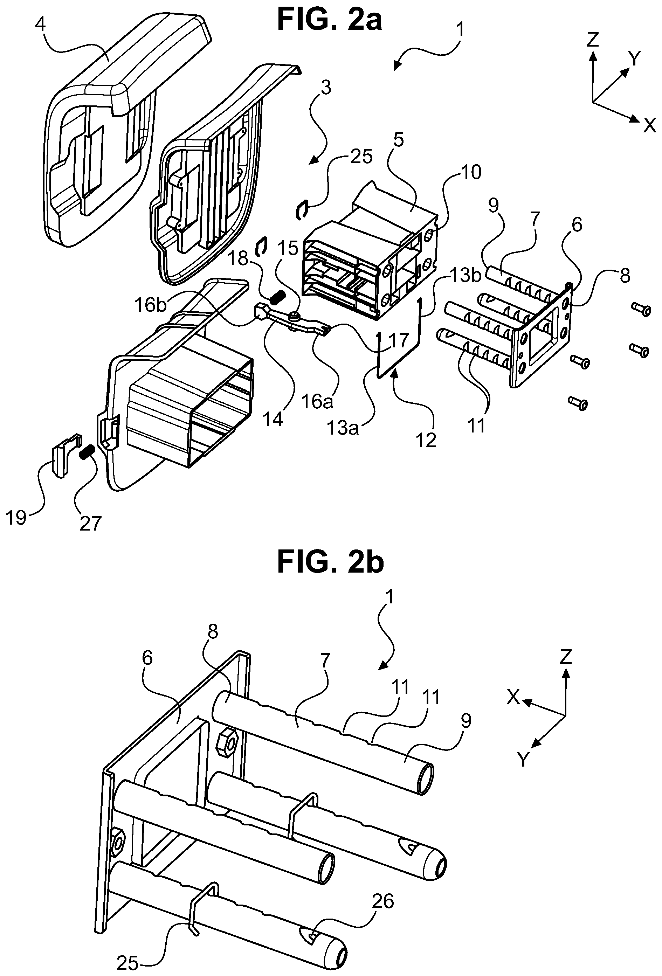

Selon la deuxième réalisation représentée notamment en figures 2a et 2b :
- l'embase 6 est métallique, les extrémités arrière 8 des tiges 7 étant fixées sur ladite embase par soudage ou rivetage,
- en fin de course du support 5 vers l'avant lors de son réglage, chacune desdites tiges est maintenue dans son conduit 10 par une épingle d'anti-extraction 25 en métal à ressort s'insérant dans un cran d'anti-extraction 26 prévu en son extrémité avant 9.

En particulier, l'épingle d'anti-extraction 25 est également utilisée pour assurer une pression radiale sur la tige 7, afin d'assurer un coulissement ajusté dans son conduit 10.

## Revendications

1. Système (1) d'appui-tête pour un dossier de siège de véhicule automobile, ledit dossier étant pourvu d'une armature métallique, ledit système comprenant :
• un appui-tête (3) comprenant un coussin (4) d'appui de la tête d'un occupant dudit siège et un support (5) recevant par l'avant ledit coussin,
• une embase (6) destinée à être fixée en recouvrement du haut et de l'avant de ladite armature,
ledit support étant monté sur ladite embase par l'intermédiaire d'un dispositif de réglage longitudinal dudit support, ledit système étant **caractérisé en ce que** ledit dispositif comprend :
• au moins deux tiges (7) métalliques parallèles s'étendant selon une direction longitudinale et présentant chacune une extrémité arrière (8) et une extrémité avant (9), lesdites tiges étant fixées par leur extrémité arrière (8) sur ladite embase, lesdites tiges étant montées coulissantes dans des conduits (10) prévus dans ledit support, lesdites tiges étant chacune pourvues d'une pluralité de crans de réglage (11) s'étageant selon ladite direction longitudinale, lesdits crans s'étageant et étant orientés de façon analogue d'une tige à l'autre,
• un verrou (12) métallique présentant une première (13a) et une deuxième (13b) branche, ledit verrou étant actionnable en translation transversale entre une position de verrouillage et une position de déverrouillage, la mise dudit verrou en position de verrouillage réalisant un emboitement de ladite première branche dans au moins un cran (11) d'une tige (7) et de ladite deuxième branche dans au moins un cran (11) d'une autre tige (7),
• un moyen d'actionnement (19) dudit verrou vers sa position de déverrouillage, ledit moyen étant monté solidairement audit support,
• un ressort (18) de rappel dudit verrou vers sa position de verrouillage.

2. Système (1) selon la revendication 1, **caractérisé en ce que** :
• il comprend en outre un bras (14) monté en rotation en sa partie médiane (15) sur le support (5), ledit bras présentant une première extrémité (16a), pourvue d'une fente (17) ou d'un orifice recevant une des branches (13a, 13b) du verrou (12), de manière à pouvoir actionner ledit verrou d'une position à l'autre par mise en rotation dudit bras, ledit bras présentant en outre une deuxième extrémité (16b),
• le ressort (18) de rappel actionne ledit bras afin de rappeler ledit verrou vers sa position de verrouillage,
• le moyen d'actionnement (19) coopère avec ladite deuxième extrémité pour permettre une rotation dudit bras en vue d'actionner ledit verrou vers sa position de déverrouillage à l'encontre dudit ressort.

3. Système (1) selon la revendication 1 ou 2, **caractérisé en ce que** le verrou (12) est à base de fil métallique replié.

4. Système (1) selon la revendication 3, **caractérisé en ce qu'**un cran de réglage (11) vu en coupe axiale présente :
• soit une forme générale de U dont les branches sont parallèles, de sorte que le verrou (12) doive être actionné par un occupant du siège afin de réaliser un réglage du support (5) vers l'avant et vers l'arrière,
• soit une forme générale de U dont les branches s'écartent l'une de l'autre à mesure que l'on se dégage dudit cran, la branche arrière étant parallèle au sens d'extraction de la branche (13a, 13b) du verrou (12) insérée dans ledit cran, de sorte que ledit verrou doive être actionné par un occupant du siège afin de réaliser un réglage du support (5) vers l'arrière et soit réglable vers l'avant par simple traction dudit support par ledit occupant.

5. Système (1) selon l'une quelconque des revendications précédentes, **caractérisé en ce que** le moyen d'actionnement (19) est sous la forme d'un bouton poussoir.

6. Système (1) selon la revendication 5, **caractérisé en ce qu'**il comprend en outre un ressort additionnel (27) de renvoi du bouton (19) en position nominale en l'absence de pression exercée dessus.

7. Système (1) selon l'une quelconque des revendications précédentes, **caractérisé en ce que** :
• il comprend quatre tiges (7), lesdites tiges vues selon la direction longitudinale se positionnant selon les quatre sommets d'un parallélogramme,
• la mise du verrou (12) en position de verrouillage entraîne un emboitement de sa première branche (13a) dans deux crans (11) respectifs de deux desdites tiges et un emboitement de sa deuxième branche (13b) dans deux crans (11) respectifs des deux autres desdites tiges.

8. Système (1) selon la revendication 7, **caractérisé en ce que** les tiges (7) vues selon la direction longitudinale se positionnent selon les quatre sommets d'un parallélogramme en forme de rectangle.

9. Système (1) selon l'une des revendications 7 ou 8, **caractérisé en ce que** :
• les tiges (7) sont fixées sur l'embase (6) par emboitement de leur extrémité arrière (8) dans des logements (21) prévus dans ladite embase, chacune desdites tiges étant maintenue en place par une épingle de blocage (22) en métal à ressort s'insérant dans un cran de blocage (23) prévu en ladite extrémité,
• les tiges (7) définissent deux paires de tiges, les extrémités avant (9) des tiges (7) de chacune desdites paires étant reliées entre elles par une traverse (24) métallique respective soudée ou rivetée sur lesdites extrémités.

10. Système (1) selon l'une quelconque des revendications 7 ou 8, **caractérisé en ce que** :
• l'embase (6) est métallique, les extrémités arrière (8) des tiges (7) étant fixées sur ladite embase par soudage ou rivetage,
• en fin de course du support (5) vers l'avant lors de son réglage, chacune desdites tiges est maintenue dans son conduit (10) par une épingle d'anti-extraction (25) en métal à ressort s'insérant dans un cran d'anti-extraction (26) prévu en son extrémité avant.
